# EUROPÄISCHE PATENTANMELDUNG

(11) **EP 1 295 819 A2**
(43) Veröffentlichungstag der Anmeldung: **26.03.2003**
(21) Anmeldenummer: 02020039.0
(22) Anmeldetag: 06.09.2002
(51) Int. Cl.: B65G 37/00, B65G 17/26, B65G 17/32

(54) **Einrichtung zum hängenden Transport von Behältern mit Flaschenhals, insbesondere PET-Flaschen**

(30) Priorität: 10.09.2001 DE 20114960 U; 20.02.2002 DE 10208192
(71) Anmelder: Flexon GmbH, 57234 Wilnsdorf (DE); Volk & Nadenau GmbH, 44149 Dortmund (DE)
(72) Erfinder: Janzen, Wolfgang, 57234 Wilnsdorf (DE); Janzen, Thomas, 57076 Siegen (DE); Nendel, Klaus, Prof. Dr.-Ing., 09569 Oederan (DE); Meynerts, Peter, Dipl.-Ing., 09224 Grüna (DE); Nadenau, Stafan, 44265 Dortmund (DE); Volk, Gundolf, 44532 Lünen (DE)
(74) Vertreter: Maxton Langmaack & Partner

(57) **Zusammenfassung**

Einrichtung zum hängenden Transport von Behältern mit Flaschenhals, mit zwei in Kettenführungen (4,5) umlaufend geführte endlose Transportketten (6.1,6.2), die im Förderbereich parallel zueinander verlaufen und einen Transportkanal (11) zur Aufnahme der Flaschenhälse (2) bilden und deren Kettenglieder (7) über Gelenkbolzen miteinander verbunden sind, wobei jedes Kettenglied (7) jeder Transportkette (6) jeweils mit wenigtens einem in Richtung auf den Transportkanal (11) ausgerichteten Tragansatz (12) versehen ist, der in der Transportlage einen Haltekragen (3) der zu transportierenden Flasche untergreifen kann, wobei die Kettenglieder jeweils mit wenigstens einem parallel zum Transportkanal (11) ausgerichteten oberen und unteren Führungssteg (14) versehen sind, die jeweils an zwei parallel zueinander verlaufenden oberen und unteren Führungsleisten (4.1,4.2;5.1,5.2) der Kettenführungen angreifen, wobei die Gelenkbolzen parallel zu den Führungsstegen (14) der Kettenglieder (7) ausgerichtet sind.

## Beschreibung

Die Erfindung betrifft eine Einrichtung zum hängenden Transport von Behältern mit Flaschenhals, die am Flaschenhals einen Haltekragen aufweisen.

In zunehmendem Maße werden in der Getränkeindustrie Kunststofflaschen eingesetzt. Der maschinelle Transport derartiger leichter Kunststofflaschen im Anschluß an ihre Herstellung, bei der Befüllung, aber auch bei wiederverwertbaren Flaschen, wie beispielsweise PET-Flaschen, bei der Reinigung und Vorbereitung für eine Neufüllung, bereitet aufgrund des geringen Gewichtes erhebliche Probleme.

Es ist bekannt, leere Kunststofflaschen über einen Förderkanal mittels Druckluft weiterzufördern, da sie über kein besonders großes Eigengewicht verfügen. Der Nachteil eines derartigen Druckluftfördersystems besteht darin, daß bei Behältern für Lebensmittel, insbesondere Getränkeflaschen im Hinblick auf die hygienischen Anforderungen ein erheblicher Aufwand für die Keimfreihaltung der Förderluft betrieben werden muß.

Aus EP-0 850 183 B ist eine Hängefördereinrichtung für Behälter mit Flaschenhals bekannt, bei der in einer horizontalen Umlenkebene zwei endlose Rollenketten geführt sind, die im Förderbereich jeweils zwischen zwei Umlenkrädern parallel mit Abstand zueinander verlaufen und einen Transportkanal bilden. An jedem Kettenglied ist ein, in Förderrichtung gesehen, im Querschnitt C-förmig ausgebildetes Hängeelement seitlich angeordnet, wobei die freien Kanten der Hängeelemente der beiden Ketten im Förderbereich gegeneinander gerichtet sind und den Haltekragen der zu fördernden Flaschen untergreifen. Der Nachteil dieser vorbekannten Fördereinrichtung besteht darin, daß zum einen die Ketten nur in einer Bewegungsebene geführt werden können und einen hohen Reibungswiderstand in den zugeordneten Kettenführungen zu überwinden haben. Aufgrund der C-förmigen Gestaltung besteht zumindest im Einlaufbereich der Flaschen die Gefahr der Einwirkung von störenden Querkräften auf die Tragansätze.

Aus WO-98/04483 ist eine ähnliche Fördereinrichtung bekannt, bei der jedoch statt Rollenketten Gliederketten verwendet werden, deren einzelne Kettenglieder an einem Ende mit einem mittigen Gelenkauge und am anderen Ende gabelförmig mit zwei mit Abstand zueinander angeordneten Gelenkaugen versehen sind, wobei die beiden mit Abstand zueinander angeordneten Gelenkaugen jeweils das mittige Gelenkauge des nächstfolgenden Kettengliedes umfassen. Die Kettenglieder sind über Gelenkbolzen miteinander verbunden. Die einzelnen Kettenglieder weisen einen trapezförmigen Führungsfuß auf, der in einer Kettenführung mit entsprechend im Querschnitt trapezförmig geformter Führungsnut geführt ist. Auch bei dieser Fördereinrichtung sind die beiden Transportketten in einer gemeinsamen horizontalen Umlenkungsebene und im Förderbereich mit Abstand parallel zueinander zur Bildung eines Transportkanals geführt. Die einzelnen Kettenglieder sind hierbei mit stegförmigen Tragansätzen versehen, die jeweils in den Förderkanal hineinragen und im Förderbereich den Haltekragen der zu fördernden Flaschen untergreifen. Der Nachteil dieser Fördereinrichtung besteht zum einen in einem erhöhten Reibungswiderstand aufgrund Gestaltung der Führung und zum anderen in der Gefahr eines Verklemmens der Kette in der Führung. Auch bei dieser Kette ist nur eine Förderung in einer Ebene möglich. Eine vergleichbare Gliederkette ist ferner aus WO-01/28895 A bekannt.

Der Erfindung liegt die Aufgabe zugrunde eine Transporteinrichtung für den hängenden Transport von Behältern der vorbezeichneten Art zu schaffen, die die Nachteile der vorbekannten Einrichtungen vermeidet und darüber hinaus einfach im Aufbau ist und in einer Ausgestaltung hinsichtlich der Führung des Transportweges auch an unterschiedliche räumliche Verhältnisse anzupassen ist.

Diese Aufgabe wird erfindungsgemäß gelöst durch eine Einrichtung der eingangs bezeichneten Art, die zwei in Kettenführungen umlaufend geführte endlose Transportketten aufweist, die im Förderbereich parallel zueinander verlaufen und einen Transportkanal zur Aufnahme der Flaschenhälse bilden und deren Kettenglieder über Gelenkbolzen miteinander verbunden sind, wobei jedes Kettenglied jeder Kette jeweils mit wenigstens einem in Richtung auf den Transportkanal ausgerichteten Tragansatz versehen ist, der in der Transportlage den Haltekragen der zu transportierenden Flaschen untergreift, wobei die Kettenglieder jeweils mit wenigstens einem parallel zum Transportkanal ausgerichteten oberen und unteren Führungssteg versehen sind, die jeweils an zwei parallel zueinander verlaufenden oberen und unteren Führungsleisten der Kettenführungen angreifen, wobei die Gelenkbolzen parallel zu den Führungsstegen der Kettenglieder ausgerichtet sind. Durch eine derart ausgestaltete Anordnung werden die im Transportkanal durch die Flaschen auf die beiden Transportketten bzw. auf die Kettenglieder der Transportketten einwirkenden Kräfte und Momente einwandfrei aufgenommen, wobei die besondere Ausgestaltung der Führung der Kettenglieder an den Führungsleisten der Transportvorrichtung keine Verklemmungen zuläßt. Die jeweils aus zwei parallelen Führungsleisten bestehenden Führungen für jede Kette sind im Aufbau einfach und in der Gesamtanordnung sowohl an Gebäudewänden als auch an einer Stützkonstruktion in einfacher Weise anzubringen.

Verwendet man entsprechend einer vorteilhaften Ausgestaltung der Erfindung Transportketten, deren Kettenglieder nicht nur um die Achse der Gelenkbolzen sondern auch um eine senkrecht zu den Gelenkbolzen ausgerichtete Achse auslenkbar miteinander verbunden sind, dann besteht die Möglich, die Transportketten nicht in nur einer Umlenkebene zu führen, sondern auch in räumlich gekrümmten Führungen, d. h. räumlich gekrümmten Transportkanälen, zu führen. So ist es möglich, ausgehend von einer horizontalen Führungsebene den durch die Transportketten gebildeten Transportkanal unter einem Winkel nach oben oder unten in eine zweite horizontale Führungsebene zu führen, wobei auch eine räumlich gekrümmte Führung zwischen den beiden Führungsebenen möglich ist.

In besonders vorteilhafter Ausgestaltung der Erfindung ist vorgesehen, daß an jeder Seite eines Kettengliedes zwei mit Abstand zueinander angeordnete, vorzugsweise stegförmige Führungselemente angeordnet sind, die jeweils eine Führungsleiste U-förmig umgreifen. Diese Ausgestaltung ist besonders gut geeignet für eine Transportkette, die bei im wesentlichen in einer senkrechten Ebene ausgerichteten Gelenkbolzen in ihrer Laufrichtung sowohl horizontal als auch senkrecht hierzu unter einem Winkel geführt werden soll.

Besonders zweckmäßig ist es, wenn jeweils der vorzugsweise stegförmig ausgebildete und in Laufrichtung der Kette ausgerichtete Tragansatz in der Längsmittelachse eines jeden Kettengliedes angeordnet ist. Diese Anordnung bietet den Vorteil, daß nur eine Kettengliedform für die beiden zusammenwirkenden Transportketten herzustellen ist.

In einer bevorzugten Ausgestaltung der Erfindung ist ferner vorgesehen, daß die Führungsleisten einen Kreisquerschnitt aufweisen. Die Führungsleisten können hierbei aus einem Vollmaterial oder auch aus einem Rohrmaterial hergestellt sein. Der Kreisquerschnitt bietet den Vorteil, daß die Führungsstege aus einem Stangenmaterial in den hier in Betracht kommenden Krümmungsradien praktisch ohne Veränderung des Querschnitts gebogen werden können. Ein weiterer Vorteil besteht darin, daß bei U-förmig die Führungsleisten umgreifenden Führungsstegen der Kettenglieder diese in ihrem Ansatz am Kettenglied der Querschnittsform der zugeordneten Führungsleiste angepaßt werden können, so daß im Übergangsbereich zwischen Kettenglied und Führungssteg eine entsprechende Materialverstärkung zur Erhöhung der Festigkeit und als Verschleißpolster vorhanden ist.

In weiterer Ausgestaltung ist es insbesondere für Fördereinrichtungen der erfindungsgemäßen Art mit langen Förderwegen, die nicht mit nur einem Transportkettenpaar zu überbrücken sind, zweckmäßig, an den Übergängen von einem Transportkettenpaar auf das folgende Transportkettenpaar die Umlenkräder einer Transportkette jeweils des eines Transportkettenpaares in Förderrichtung versetzt zu den Umlenkrädern des anderen Transportkettenpaare anzuordnen. Dadurch wird erreicht, daß in den sich im Bereich der Umlenkräder ergebenden, sich vergrößernden Abständen zwischen den beiden Transportkettenpaaren keine Lücke entsteht. Besonders zweckmäßig ist es hierbei, wenn jeweils zwischen zwei in Förderrichtung aufeinanderfolgenden Transportkettenpaaren jeweils der einen Führung ein den Zwischenraum zur anderen parallel-laufenden Transportkette überbrückendes Stützelement für die zu fördernde Flaschen angeordnet ist.

Weitere Ausgestaltungen und Merkmale der Erfindung sind den Ansprüchen und der nachfolgenden Beschreibung von Ausführungsbeispielen zu entnehmen. Es zeigen:
- Fig. 1: in perspektivischer Ansicht den Einlaufbereich einer Transporteinrichtung mit Transportkanal,
- Fig. 2: eine Stirnansicht der Transporteinrichtung gemäß Fig. 1,
- Fig. 3: einen Vertikalschnitt durch den Transportkanal,
- Fig. 4: ein Kettenglied für eine Transportkette der Fördereinrichtung,

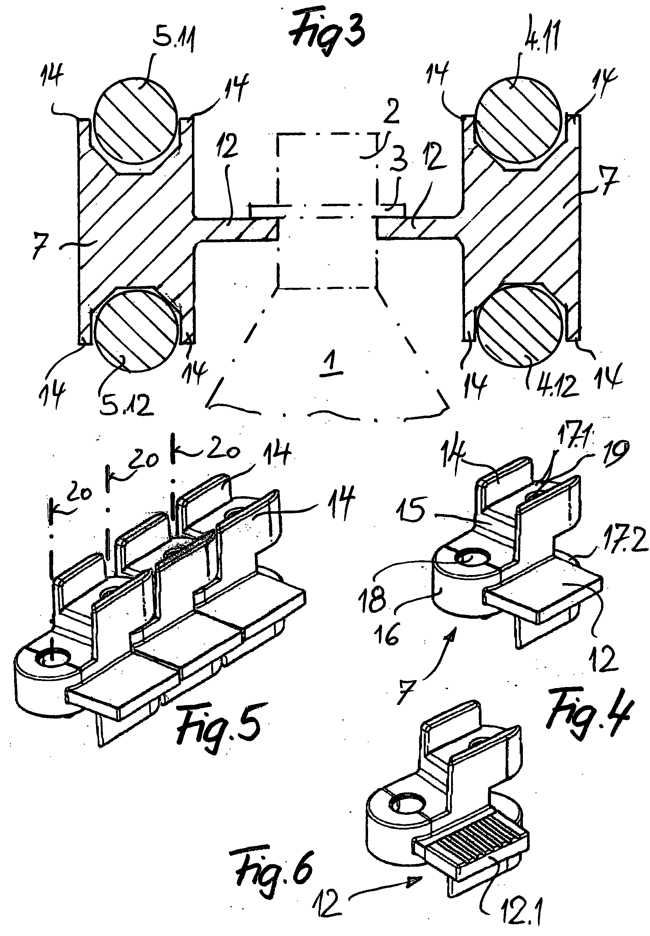

- Fig. 5: ein Teilstück einer Transportkette,
- Fig. 6: ein Kettenglied in abgewandelter Ausführungsform,
- Fig. 7: schematisch in einer Seitenansicht eine Transporteinrichtung mit Höhenversatz,
- Fig. 8: eine Aufsicht auf einen Übergangsbereich eines ersten Transportkettenpaares auf ein zweites Transportkettenpaar mit Kettenspanner,
- Fig. 9: Stirnansichten der Transporteinrichtung gemäß Fig. 1
- Fig. 10: eine perspektivische Darstellung des Übergangsbereichs mit zwei versetzt zueinander angeordneten Transportketten.

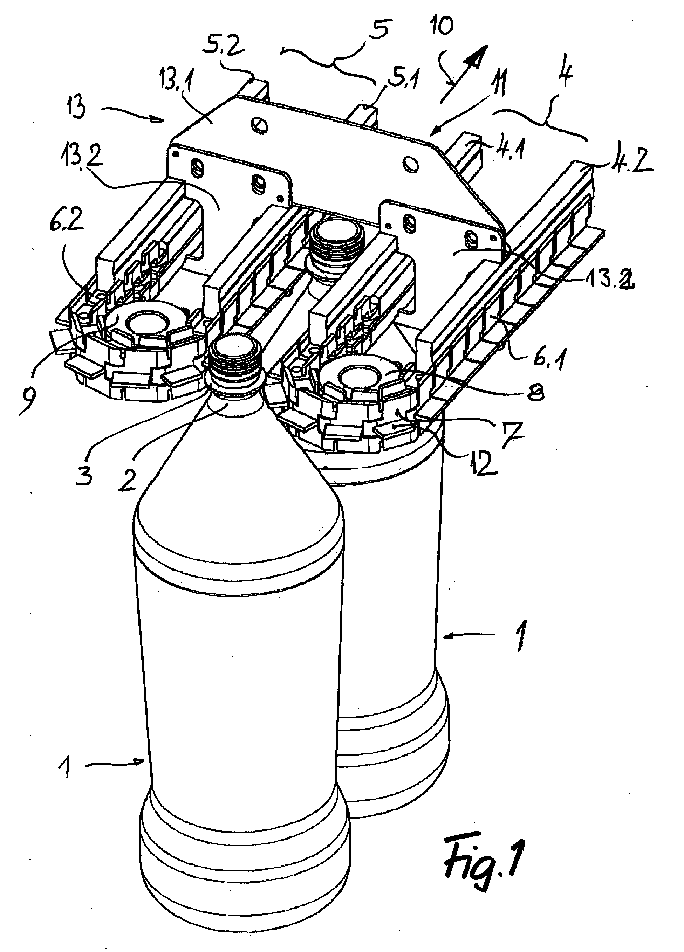

In Fig. 1 ist der Einlaufbereich einer Transporteinrichtung zum hängenden Transport von PET-Flaschen 1 dargestellt, die jeweils am Flaschenhals 2 mit einem Haltekragen 3 versehen sind.

Die Transporteinrichtung besteht im wesentlichen aus zwei parallel-laufenden Kettenführungen 4, 5, in denen jeweils eine endlose Transportkette 6.1 und 6.2 endlos geführt ist. Die aus einer Vielzahl über Gelenkbolzen miteinander verbundenen Kettengliedern gebildeten Transportketten 6.1, 6.2 werden jeweils am Ende ihrer jeweiligen Kettenführung 4, 5 über Kettenräder 8, 9 umgelenkt, wobei durch die beiden in einer Ebene liegenden Kettenräder 8, 9 eine Umlenkebene definiert ist. Die einander benachbarten Kettentrums beider Transportketten bilden einen Förderbereich und begrenzen einen Transportkanal 11. Wie nachstehend noch näher ausgeführt werden wird, weist jedes Kettenglied 7 einen Tragansatz 12 auf, so daß die Folge der Tragansätze 12 der beiden Transportketten 6.1, 6.2 im Transportkanal 11 praktisch einen geschlossenen Steg bilden, auf dem jeweils der Haltekragen 3 der zu transportierenden Flasche 1 aufliegt, so daß die Flaschen in Richtung des Pfeiles 10 mitgenommen werden.

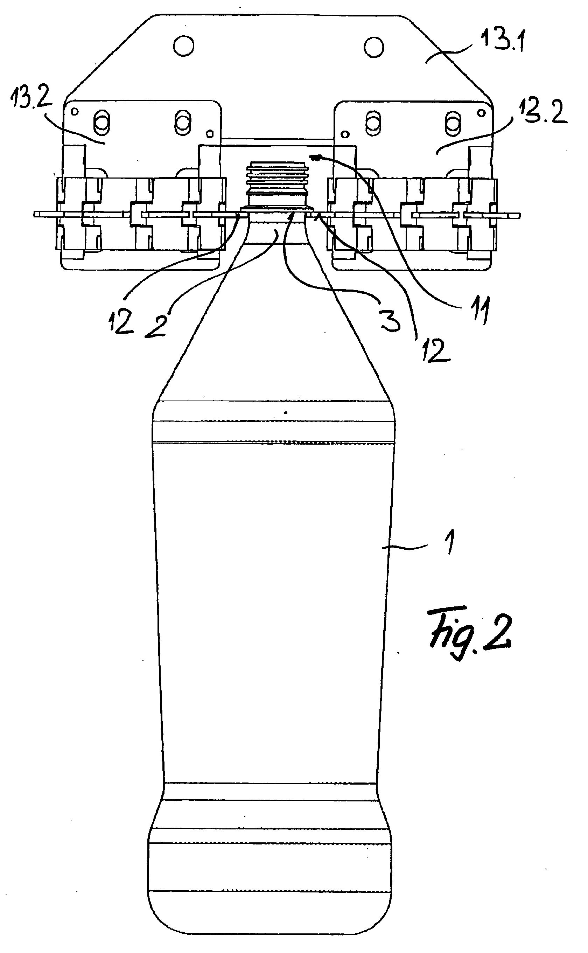

Die Kettenführungen 4, 5 weisen jeweils im Anschluß an den Umlenkbereich Führungsleisten 4.1 und 4.2 sowie 5.1 und 5.2 auf, an denen die Kettenglieder 7 angreifen, wie nachstehend noch näher dargestellt werden wird. Bei der hier dargestellten Ausführungsform sind jeweils zwei parallele Führungsleisten 4.1 bzw. 4.2 parallel übereinander angeordnet, wie aus Fig. 3 ersichtlich.

Die Führungsleisten 4.1 und 4.2 einerseits sowie die Führungsleisten 5.1 und 5.2 andererseits sind über mehrere auf die Länge der Transporteinrichtung verteilt angeordneten Hängevorrichtungen 13 über ein Stützgestell bzw. Stützträger T (vgl. Fig. 9) oder auch an Gebäudeteilen befestigt.

Die Hängevorrichtung 13 besteht im wesentlichen aus einem gemeinsamen Halteblech 13.1 sowie jeweils einem Tragblech 13.2, das etwa die Form eines Doppel-T aufweist, für jede der beiden Führungen 4 und 5.

In Fig. 2 ist schematisch eine Stirnansicht der Anordnung gemäß Fig. 1 dargestellt, die erkennen läßt, wie die Tragansätze 12 jeweils den Haltekragen 3 der zu transportierenden Flasche 1 untergreifen.

In Fig. 3 ist schematisch in einem Querschnitt durch den Transportkanal 11 gemäß Fig. 1 die Führung der Kettenglieder 7 in einer bevorzugten Ausführungsform dargestellt. Bei dem dargestellten Ausführungsbeispiel sind jeweils für die Führung 4 und die Führung 5 im Bereich des Transportkanals 11 jeweils ein oberer und ein unterer Führungssteg 4.1 und 5.1 vorgesehen, der bei dem dargestellten Ausführungsbeispiel einen Kreisquerschnitt aufweist. Die Führungen für den rücklaufenden Kettentrum sind jeweils entsprechend ausgebildet. Die einzelnen Kettenglieder 7 sind jeweils mit zwei parallelen, den Führungsstegen 4.1 bzw. 5.1 zugeordneten Führungsstegen 14 versehen, die jeweils die zugeordnete Führungsleiste U-förmig umgreifen. Durch diese Ausgestaltung ist nicht nur eine klemmfreie Führung mit geringem Reibwiderstand der Kettenglieder auf den parallelen Führungsleisten 4.1 und 4.2 gewährleistet, sondern auch eine gute Lastaufnahme bezüglich der Vertikalkräfte und der hierdurch bedingten, auf die Kettenglieder bzw. die durchlaufende Transportkette wirkenden Momente. Während dies für den Transport von leeren Kunststofflaschen von untergeordneter Bedeutung ist, erlaubt diese Ausführungsform auch den Transport gefüllter Flaschen, bei denen ein Gewicht von bis zu 1,5 kg je Flasche aufzunehmen ist.

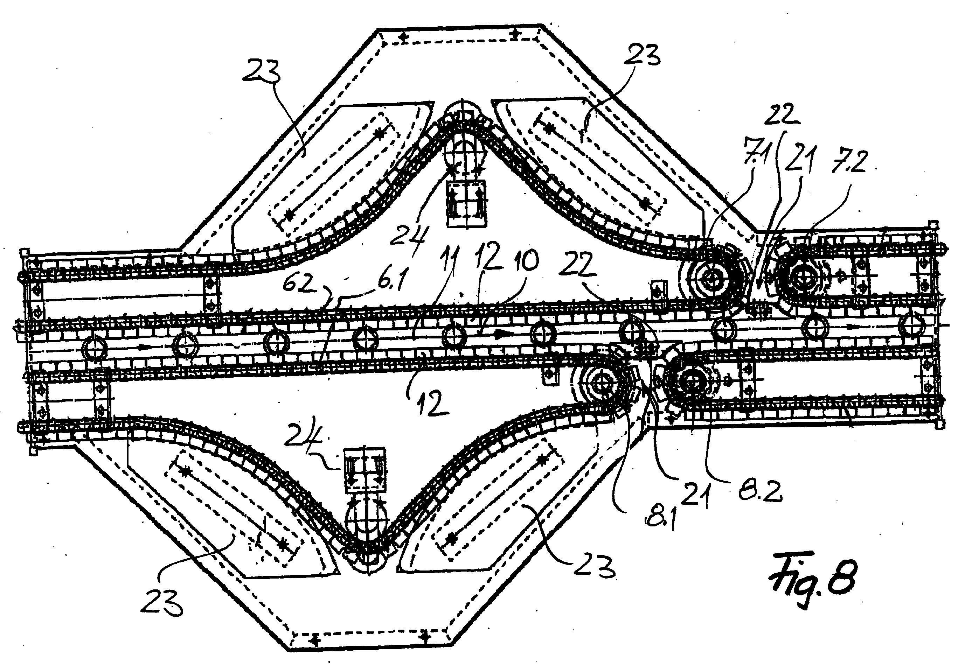

Statt nur eines Tragansatzes 12 an jedem Kettenglied 7 können auch jeweils zwei parallele Tragansätze vorgesehen werden, die den Haltekragen 3 der Flaschen sowohl auf seiner Unterseite als auch auf seiner Oberseite übergreifen. Bei einer Schrägförderung, wie in Fig. 7 dargestellt, würde infolge der Schrägstellung der Flaschen eine entsprechende Klemmwirkung erzeugt. Da leere PTE-Flaschen nur ein geringes Gewicht aufweisen, ergibt sich keine unzulässige Beanspruchung des Materials des Haltekragens.

Während die einzelnen Kettenglieder 7 der Transportketten vorzugsweise einstückig aus einem Kunststoff hergestellt sind, sind die Führungsleisten 4.1 und 4.2 ebenso wie die Führungsleisten 5.1 und 5.2 für den rücklaufenden Trum der Transportkette aus Metall hergestellt. Die Führungsleisten können hierbei, wie dargestellt, aus einem Vollmaterial oder aber auch aus einem Rohrmaterial hergestellt sein. Der Kreisquerschnitt bietet den Vorteil, daß auch Kurvenführungen zwischen den endseitigen Kettenrädern 8 vorgesehen werden können, da ein Kreisquerschnitt praktisch ohne Veränderung der Querschnittsabmessungen gebogen werden kann. Je nach Belastung können auch andere Querschnittformen, gegebenenfalls mit höherer Lastaufnahmefähigkeit, vorgesehen werden, an die dann die Führungsstege 14 der einzelnen Kettenglieder entsprechend anzupassen sind.

In Fig. 4 ist schematisch ein einzelnes Kettenglied 7 für eine Transportkette dargestellt. Dieses weist im wesentlichen einen Gelenkkörper 15 auf, der an einem Ende mit einem mittigen Gelenkauge 16 und am anderen Ende mit zwei mit Abstand zueinander angeordneten Gelenkaugen 17.1 und 17.2 versehen und gabelförmig ausgebildet sind, so daß jeweils das mittige Gelenkauge 16 von den beiden Gelenkaugen 17. 1 und 17.2 des benachbarten Kettengliedes umfaßt ist. Durch die Bohrungen 18 und 19 der Gelenkaugen wird dann jeweils ein Gelenkbolzen hindurch gesteckt, so daß die einzelnen Kettenglieder um die Achse der Gelenkbolzen gegeneinander verschwenkbar sind.

Bei einer zylindrischen Bohrung 18 des mittigen Gelenkauges 16 ist eine derartige Kette nur in der durch die Kettenräder 8, 9 vorgegebenen Umlenkebene gelenkig. Wird jedoch die Bohrung 18 des mittigen Gelenkauges 16 als Langloch ausgeführt oder aber von beiden Seiten zur Mitte hin konisch verengt geformt, dann ist bei einem entsprechend ausgebildeten Freiraum zwischen dem mittigen Gelenkauge des einen Kettengliedes und den beiden parallelen Gelenkaugen des anderen Kettengliedes auch eine Schwenkmöglichkeit zumindest senkrecht zu der durch die Gelenkbolzen vorgegebenen Ebene, d. h. um eine Achse senkrecht zu den Gelenkbolzen möglich. Damit wird die Transportkette kurvengängig, d. h. sie kann auch in einer Ebene senkrecht zu der durch die beiden Umlenkräder 7, 8 definierten Umlenkebene in einer Kurve geführt werden.

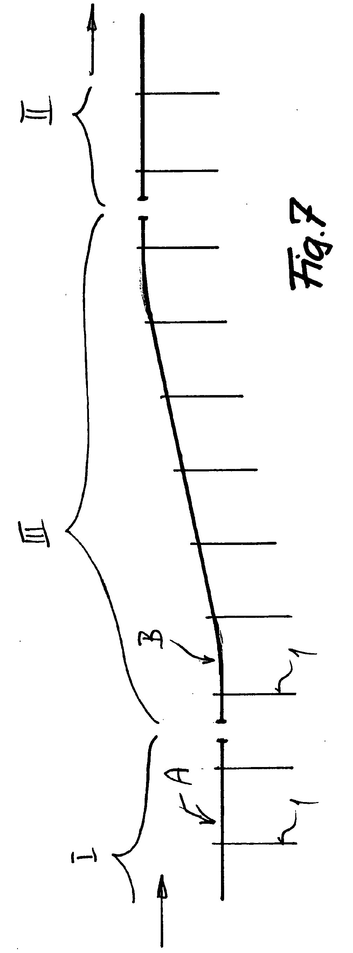

Fig. 6 zeigt eine abgewandelte Ausführungsform für das Kettenglied gemäß Fig. 4. Bei dieser Ausführungsform ist der Tragansatz 12 zumindest auf seinen tragenden Flächen mit einer reibungserhöhenden oder hafterhöhenden Beschichtung versehen, beispielsweise mit einer elastischen Schicht, die auch - wie hier dargestellt - profiliert sein kann.

Zweckmäßig ist es hierbei, wenn der Tragansatz 12 zumindest an seiner dem Transportkanal 11 zugekehrten Stegkante 12.1 elastisch verformbar ausgebildet ist. Damit ist die Möglichkeit gegeben, den durch die Stegkanten 12.1 der einzelnen Kettenglieder begrenzten Transportkanal 11 im Abstand so zu dimensionieren, daß die zu transportierenden Flaschen nicht nur lose auf den Tragansätzen 12 aufliegen, wie dies in Fig. 2 dargestellt ist, sondern geringfügig zwischen den Tragansätzen 12 der beiden Förderketten 6 und 7 um geringes Maß geklemmt werden. Damit ist sichergestellt, daß auch bei einem unter einem Winkel ansteigend oder abfallend verlaufenden Transportkanal 11 die zu transportierenden Flaschen zuverlässig gehalten werden. Insbesondere bei leeren Kunststofflaschen reicht schon eine geringfügige Klemmkraft aus. Dies ist in der schematischen Schnittdarstellung gemäß Fig. 3 angedeutet. Hierbei ist auch der besondere Vorteil der erfindungsgemäßen Führung der Kettenglieder mit ihren Führungsstegen 14 an den Führungsleisten 4.1 und 5.1 erkennbar. Durch die mittige Anordnung der Tragansätze 12 ergibt sich eine verkantungsfreie Führung der Kette bzw. der Kettenglieder an den Führungsleisten.

Die Transporteinrichtung wird je nach Förderlänge aus einem oder mehreren entsprechend Fig. 1 hintereinander angeordneten Elementen zusammengesetzt. An jedem Element, das aus zwei entsprechend Fig. 1 aufgebauten und geführten Transportkettenpaaren gebildet ist, werden die Umlenkkettenräder oder gesonderte Antriebskettenräder mit Antriebsmotoren verbunden, zweckmäßigerweise so, daß die den Transportkanal 11 begrenzenden Kettentrumme "auf Zug" angetrieben werden.

Bei der Verwendung der vorstehend beschriebenen kurvengängigen Transportkette ist es - wie in Fig. 7 dargestellt - auch möglich, die zu transportierenden Flaschen aus einer ersten horizontalen Förderebene I unter Überwindung einer Höhendifferenz in eine zweite Förderebene II zu transportieren, wobei der ansteigende (oder abfallende) Förderbereich III zweckmäßigerweise nur aus einem Transportkettenpaar gebildet wird, um die jeweils im Übergangsbereich zwischen zwei aufeinanderfolgenden Elementen entstehenden Probleme, wie nachstehend noch näher erläutert werden wird, zu vermeiden.

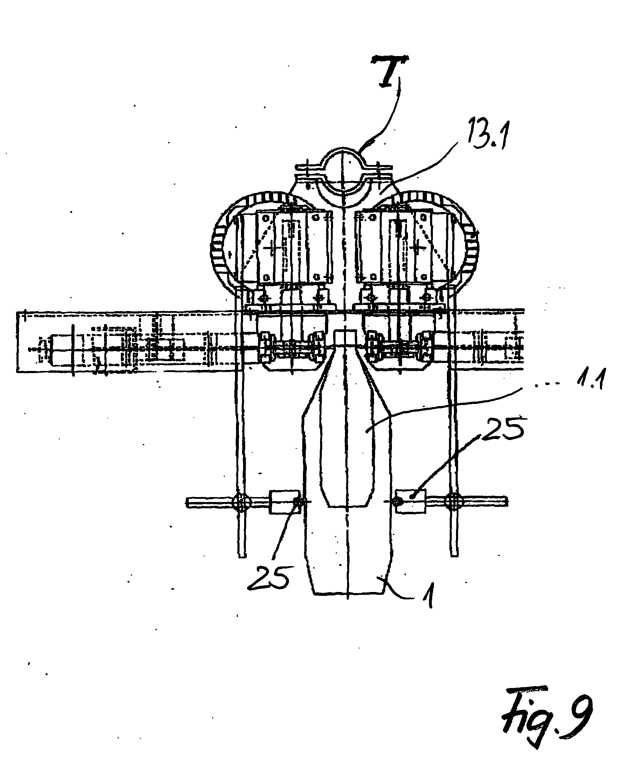

In Fig. 8 ist in einer Aufsicht der Übergangsbereich zwischen zwei aufeinanderfolgenden Förderelementen A und B dargestellt. Würde man, wie sich aus Fig. 1 unschwer ableiten läßt, mehrere Elemente hintereinander anordnen, bei denen, wie Fig. 1 zeigt, die Transportketten mit ihren Führungen genau spiegelbildlich zueinander angeordnet sind, dann ergäbe sich im Übergangsbereich zwischen zwei aufeinanderfolgenden Elementen ein Zwischenraum, in dem die zu transportierenden Flaschen ohne jegliche Führung sind. Da im Hinblick auf das weitere Handling der zu transportierenden Flaschen diese in möglichst gleichem Abstand befördert werden sollen, ergäbe sich in einem derartigen Zwischenraum eine Stauzone, durch die jeweils die sich von den Tragansätzen des vorausgehenden Transportkettenpaares lösende Flasche dann durch eine oder mehrere nachfolgende Flaschen in den keilförmigen Aufnahmebereich des nächstfolgenden Transportkettenpaares hineingedrückt würde, wobei dann die Flaschen dicht an dicht den Transportkanal 11 durchlaufen würden.

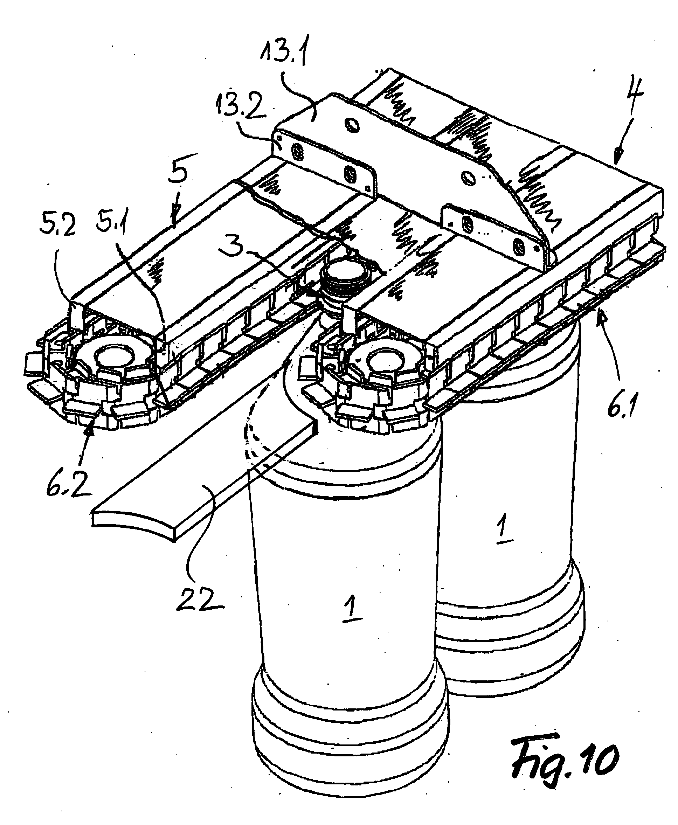

Um einen gleichmäßigen Förderabstand zwischen den einzelnen Flaschen zu gewährleisten, werden zweckmäßigerweise - wie in Fig. 8 dargestellt - die Umlenkräder 7.1, 8.1 bzw. 7.2, 8.2 eines jeden ein Förderelement A und B bildenden Transportkettenpaares versetzt zueinander angeordnet, so daß die aufeinanderfolgenden Elemente sich jeweils, wie aus der Zeichnung ersichtlich, überlappen. Die Zwischenräume 21 zwischen jeweils den Endbereichen der aufeinanderfolgenden Transportketten auf jeder Seite des Transportkanals 11 sind zur Überbrükkung des nicht zu vermeidenden Freiraums jeweils mit einer stegförmigen Stützführung 22 versehen, die fluchtend mit den Tragansätzen der beiden aufeinanderfolgenden Transportketten ausgerichtet ist (vgl. Fig. 10). Auf diese Weise ist gewährleistet, daß auch in diesem Bereich auf die zu transportierenden Flasche durch die den Zwischenraum auf der anderen Seite überlappenden Transportkette eine Förderkraft ausgeübt wird und so der Abstand zwischen den aufeinanderfolgenden Flaschen gewahrt werden kann, bis diese von der in Förderrichtung zurückversetzten Transportkette des nachfolgenden Elementes ebenfalls erfaßt und in der vorgeschriebenen Weise weiter transportiert werden. Wie aus der Aufsicht gemäß Fig. 8 ersichtlich kann es zweckmäßig sein, jeweils auf dem rücklaufenden Trum der Transportketten Kettenspanner 23 vorzusehen, denen in der hier dargestellten Ausführungsform auch die Kettenantriebe 24 zugeordnet sind, so daß im jeweiligen Einlaufbereich für die Flaschen und in dem hier dargestellten Übergangsbereich Stauraumprobleme vermieden sind.

Wie aus Fig. 9 ersichtlich, kann es zweckmäßig sein, in diesem Bereich eine zusätzliche Führung 25 in Form von einstellbaren Bremsleisten vorzusehen, um eine Drehung der Flaschen um ihre Hochachse im Übergangsbereich zu vermeiden. Bei einer Ausgestaltung des Transportkanals 11, bei dem über die Tragansätze der Flaschenhals unterhalb des Haltekragens leicht geklemmt wird, wie dies beispielsweise bei ansteigenden oder abfallenden Förderstrecken entsprechend Fig. 7 zweckmäßig ist, sollte in diesen Übergangsbereichen der durch die Stegkante 12.1 der Tragansätze 12 definierte Abstand des Transportkanals geringfügig vergrößert werden, so daß die Klemmung in einem derartigen Übergangsbereich aufgehoben ist und so in Umfangsrichtung auf den Flaschenhals 2 die Einwirkung von Rotationskräften minimiert werden kann.

Die Einstellbarkeit der Bremsleisten ermöglicht eine Anpassung an unterschiedliche Flaschengrößen, wie dies durch die deutlich kleinere Flasche 1.1 angedeutet ist. Die Abmessungen im Haltebereich sind in der Regel für unterschiedliche Flaschengrößen identisch.

## Patentansprüche

1. Einrichtung zum hängenden Transport von Behältern mit Flaschenhals, insbesondere PET-Flaschen, **gekennzeichnet durch** zwei in Kettenführungen (4, 5) umlaufend geführte endlose Transportketten (6.1, 6.2), die im Förderbereich parallel zueinander verlaufen und einen Transportkanal (11) zur Aufnahme der Flaschenhälse (2) bilden und deren Kettenglieder (7) über Gelenkbolzen miteinander verbunden sind, wobei jedes Kettenglied (7) jeder Transportkette (6) jeweils mit wenigstens einem in Richtung auf den Transportkanal (11) ausgerichteten Tragansatz (12) versehen ist, der in der Transportlage den Haltekragen (3) der zu transportierenden Flasche untergreift, wobei die Kettenglieder jeweils mit wenigstens einem parallel zum Transportkanal (11) ausgerichteten oberen und unteren Führungssteg (14) versehen sind, die jeweils an zwei parallel zueinander verlaufenden oberen und unteren Führungsleisten (4.1, 4.2; 5.1, 5.2) der Kettenführungen angreifen, wobei die Gelenkbolzen parallel zu den Führungsstegen (14) der Kettenglieder (7) ausgerichtet sind.

2. Einrichtung nach Anspruch 1, **dadurch gekennzeichnet, daß** an jeder Seite eines Kettengliedes (7) zwei mit Abstand zueinander angeordnete, vorzugsweise stegförmige Führungselemente (14) angeordnet sind, die jeweils eine Führungsleiste (4.1, 5.1) U-förmig umgreifen.

3. Einrichtung nach Anspruch 1 oder 2, **dadurch gekennzeichnet, daß** der Tragansatz (12) stegförmig ausgebildet und in Laufrichtung der Transportkette ausgerichtet ist.

4. Einrichtung nach einem der Ansprüche 1 bis 3, **dadurch gekennzeichnet, daß** die Kettenglieder (7) mit ihren Tragansätzen (12) und Führungsstegen (14) formschlüssig, einstückig aus Kunststoff hergestellt sind.

5. Einrichtung nach einem der Ansprüche 1 bis 4, **dadurch gekennzeichnet, daß** der Tragansatz (12) eines jeden Kettengliedes an seiner dem Transportkanal (11) zugekehrten Stegkante (12.1) elastisch verformbar ausgebildet ist.

6. Einrichtung nach einem der Ansprüche 1 bis 5, **dadurch gekennzeichnet, daß** der Tragansatz (12) mit einer reibungserhöhenden Beschichtung versehen ist.

7. Einrichtung nach einem der Ansprüche 1 bis 6, **dadurch gekennzeichnet, daß** die Führungsleisten (4.1, 4.2; 5.1, 5.2) an stegartigen, etwa Doppel-T-förmigen Tragblechen (13.2) befestigt sind.

8. Einrichtung nach einem der Ansprüche 1 bis 7, **dadurch gekennzeichnet, daß** die Tragbleche (13.2) im wesentlichen paarweise an einem gemeinsamen Träger (13.1) angeordnet sind.

9. Einrichtung nach einem der Ansprüche 1 bis 8, **dadurch gekennzeichnet, daß** die Führungsleisten der Kettenführungen (4, 5) zu einem räumlich gekrümmt verlaufenden Transportkanal geformt sind.

10. Einrichtung nach einem der Ansprüche 1 bis 9, **dadurch gekennzeichnet, daß** die Führungsleisten (4.1, 4.2; 5.1, 5.2) der Kettenführungen (4, 5) einen Kreisquerschnitt aufweisen.

11. Einrichtung nach einem der Ansprüche 1 bis 10, **dadurch gekennzeichnet, daß** bei der Anordnung von wenigstens zwei in Transportrichtung hintereinander angeordneten Transportkettenpaaren jeweils im Übergangsbereich zwischen den beiden aufeinanderfolgenden Transportkettenpaaren die Umlenkräder (8, 9) jeweils in Längsrichtung versetzt zueinander angeordnet sind.

12. Einrichtung nach Anspruch 11, **dadurch gekennzeichnet, daß** in einem Übergangsbereich mit versetzt zueinander angeordneten Kettenumlenkräder eine Stützführung (22) für den Flaschenhals der zu transportierenden Flasche angeordnet ist.

13. Einrichtung nach einem der Ansprüche 1 bis 12, **dadurch gekennzeichnet, daß** die Kettenglieder (7) um eine senkrecht zu den Gelenkbolzen ausgerichtete Achse auslenkbar miteinander verbunden sind.
